# EUROPÄISCHE PATENTSCHRIFT

(11) **EP 1 395 943 B1**
(45) Veröffentlichungstag und Bekanntmachung des Hinweises auf die Patenterteilung: **16.08.2006**
(21) Anmeldenummer: 02774027.3
(22) Anmeldetag: 27.05.2002
(51) Int. Cl.: G06K 9/00

(54) **VERFAHREN ZUM PRÜFEN EINES FINGERABDRUCKS**
METHOD FOR VERIFYING A FINGERPRINT
PROCEDE POUR CONTROLER UNE EMPREINTE DIGITALE

(30) Priorität: 30.05.2001 DE 10126369
(43) Veröffentlichungstag der Anmeldung: 10.03.2004
(73) Patentinhaber: Giesecke & Devrient GmbH, 81677 München (DE)
(72) Erfinder: MÜLLER, Robert, 81673 München (DE)
(74) Vertreter: Klunker . Schmitt-Nilson . Hirsch
(86) Internationale Anmeldenummer: PCT/EP2002/005801
(87) Internationale Veröffentlichungsnummer: WO 2002/097712

(56) Entgegenhaltungen:
- EP-A- 0 736 836
- WO-A-94/25938
- DE-A- 19 811 332
- US-A- 5 982 914

## Beschreibung

Die Erfindung betrifft ein Verfahren zur Prüfung eines Fingerabdrucks gemäß dem Oberbegriff des unabhängigen Anspruchs 1.

Die Fingerabdruckprüfung gewinnt immer mehr an Bedeutung im Zusammenhang mit der Verwendung von Chipkarten, welche zur Identifizierung und Verifizierung berechtigter Personen, beispielsweise bei Zugangskontrollen oder bei der Durchführung von Finanztransaktionen, eingesetzt werden.

Die Überprüfung des Fingerabdrucks ersetzt dabei im wesentlichen die PIN-Eingabe mit dem Vorteil, daß der Benutzer sich hier keine Zahlenkombination merken muß und die Sicherheit erhöht ist, da im Gegensatz zur PIN ein Fingerabdruck nicht ausgespäht oder durch Probieren gefunden werden kann.

Zur Überprüfung des Fingerabdrucks ist es bekannt, Terminals vorzusehen, die mit einem Sensor zur Aufnahme des Fingerabdrucks ausgestattet sind. Der aufgenommene Fingerabdruck wird entweder im Terminal oder auf der Chipkarte mit einem auf der Chipkarte gespeicherten Fingerabdruck verglichen. Derartige Anordnungen sind beispielsweise aus der EP-A 0 343 580 bekannt

Da die Auswertung eines Fingerabdrucks die Rechenleistung, welche auf einer Chipkarte realisierbar ist, übersteigt, findet die Auswertung üblicherweise im Terminal statt. Die Berechnung im Terminal hat jedoch den Nachteil, daß die in der Chipkarte gespeicherten Referenzwerte nach außen gegeben werden, wodurch mittels Abhören oder sonstigen Angriffsversuchen die Referenzwerte, wie sie in der Chipkarte abgelegt sind, durch unberechtigte Dritte ermittelt werden können.

Die deutsche Offenlegungsschrift DE 198 11 332 offenbart ein Verfahren zur Fingerabdruckverifikation, gemäß dem ein Teil des Vergleichs (zB hinsichtlich der Koordinaten von Minutien) im Terminal und ein anderer Teil (zB hinsichtlich der Art der Minutien) in der Chipkarte erfolgt. Das amerikanische Patent US 5 982 914 offenbart eine Fingerabdruckverifikation auf der Basis von Information über Minutien und Poren. Chipkarten werden nicht diskutiert. Die internationale Patentanmeldung WO 94 25938 offenbart ebenfalls Fingerabdruckverifikation hinsichtlich Minutien und Poren, die auf einer Chipkarte gespeichert sind. Die eigentliche Verifikation erfolgt aber gänzlich außerhalb der Chipkarte.

Um die oben genannten Nachteile zu vermeiden, wurde in der DE-A 19811332 vorgeschlagen, sämtliche sicherheitsrelevanten Operationen innerhalb des Datenträgers durchzuführen und lediglich rechenintensive Operationen auszulagern, wenn durch diese Auslagerung die Sicherheit nicht gefährdet ist. Im Rahmen der Auslagerung wird von der Chipkarte vorgegeben, welche Daten in welcher Form vom Endgerät an den Datenträger übermittelt werden. Insbesondere wird im Endgerät eine Vorauswertung der Meßwerte durchgeführt, in deren Rahmen eine Verknüpfung von aus den Meßwerten erhaltenen Zwischenergebnissen mit Daten durchgeführt wird, die dem Endgerät vom Datenträger übermittelt wurden. Das Endgerät übermittelt dann lediglich das Ergebnis der Verknüpfung an den Datenträger, in dem anhand der Verknüpfungsergebnisse mit vergleichsweise geringem Aufwand überprüft werden kann, ob das erfaßte biometrische Merkmal von einem berechtigten Nutzer stammt.

Ausgehend von dem bekannten Stand der Technik ist es die Aufgabe vörliegender Erfindung, ein Verfahren anzugeben, welches insbesondere an die Fingerabdruckprüfung angepaßt ist und eine gegenüber dem Stand der Technik weitere Reduzierung des in der Karte durchgeführten Rechenaufwands erlaubt

Diese Aufgabe wird ausgehend von den Merkmalen des Oberbegriffs des Anspruchs 1 durch die kennzeichnenden Merkmale des Anspruchs gelöst.

Vorteilhafte Ausgestaltungen der Erfindung sind in den abhängigen Ansprüchen angegeben.

Die Erfindung sieht ein Verfahren zum Prüfen eines Fingerabdrucks vor, bei dem Referenzdaten, welche zumindest die Positionen und Orientierungen von Minutien und Poren sowie einen Ausrichtungsvektor enthalten. Bei der Prüfung eines Fingerabdrucks werden zunächst die Meßwerte aufgenommen, welche den Ist-Wert des aktuell aufgenommenen Fingerabdrucks bestimmen. Aus diesen Meßwerten werden die Minutien und die Poren extrahiert. Zur Überprüfung der Minutien werden die entsprechenden Referenzdaten sowie der Ausrichtungsvektor aus dem tragbaren Datenträger ausgelesen, so daß die Minutien des aufgenommenen Fingerabdrucks mit den ent sprechenden Referenzdaten verglichen werden können.

Zur weiteren Überprüfung innerhalb des tragbaren Datenträgers wird die Position bzw. relative Position der Poren zu den Minutien an den Datenträger übermittelt, d.h die Überprüfung der Poren wird im tragbaren Datenträger vorgenommen. Durch das erfindungsgemäße Verfahren wird eine Arbeitsteilung bei der Überprüfung eines Fingerabdrucks vorgenommen, bei dem vorzugsweise im Terminal die Überprüfung der Minutien stattfindet, welche vergleichsweise rechenaufwendig ist, während die Überprüfung der Poren im tragbaren Datenträger, z.B. einer Chipkarte, welche über weniger Rechenleistung verfügt, durchgeführt wird. Dadurch, daß eine Überprüfung der Poren notwendiger Teil des Überprüfungsverfahrens ist, wird keine Einbuße an Sicherheit erlitten, indem die rechenintensive Minutienprüfung in einem externen Gerät durchgeführt wird.

Eine weitere Vereinfachung der Berechnung innerhalb des tragbaren Datenträgers wird erreicht, wenn eine Positions- und Rotationsabweichung des Ausrichtungsvektors in dem externen Gerät errechnet wird, daraus ein Ausrichtungspunkt bestimmt wird, welcher dann an den tragbaren Datenträger gesendet wird, um dort die Position der Poren zu den Minutien mit den Referenzwerten zu vergleichen. Auf diese Weise kann die Zeit für die Berechnung innerhalb des tragbaren Datenträgers weiter reduziert werden.
Im weiteren hat es sich als vorteilhaft erwiesen, daß der Startpunkt des Ausrichtungsvektors der Schwerpunkt der Minutienkoordinaten bzw. das Zentrum eines Fingerabdrucks ist. Durch diese Wahl des Startpunktes wird das spätere Sortieren der Minutien bzw. Poren erleichtert.

Zur Erhöhung der Sicherheit bei der Auswertung kann zusätzlich die Anzahl der Linienübergänge als Teil des Referenzdatensatzes im tragbaren Datenträger abgelegt werden, so daß bei der Überprüfung des Fingerabdrucks auch die Anzahl der Linienübergänge (ridge counts) berücksichtigt werden kann.

Im weiteren kann vorzugsweise im externen Gerät ein Vergleichsdatensatz erzeugt werden, der die relativen Koordinaten der Poren zum Startpunkt des Ausrichtungsvektors enthält.

Eine weitere vorteilhafte Ausgestaltung der Erfindung sieht vor, daß die relativen Koordinaten nach Abstand und/oder Winkel zum Startpunkt sortiert werden. Durch die Sortierung vereinfacht sich die Überprüfung des Fingerabdruckes, da die Sortierung bereits eine günstige Reihenfolge für die Prüfung der einzelnen Minutien bzw. Poren vorgibt

Eine Erhöhung der Sicherheit kann auch erreicht werden, indem zusätzlich die Anzahl der Linienübergänge zwischen dem Startpunkt und den Poren aufgezeichnet und ausgewertet wird. Dieses zusätzliche Merkmal der Linienübergänge zwischen Startpunkt und Poren kann entweder im externen Gerät oder im tragbaren Datenträger ausgewertet werden.

Zur Erhöhung der Sicherheit kann weiterhin vorgesehen sein, daß der Ausrichtungsdatensatz in der Chipkarte auslesbar ist, der Vergleichsdatensatz jedoch nicht auslesbar gespeichert ist.

Im folgenden wird die Erfindung anhand der Fig. 1 bis 5 näher dargestellt. Es zeigen:
- Fig. 1: eine Chipkarte in Aufsicht,
- Fig. 2: ein Blockschaltbild des integrierten Schaltkreises der Chipkarte aus Fig. 1,
- Fig. 3: ein Blockschaltbild eines Endgeräts,
- Fig. 4: Fingerabdrücke in verschiedener Vergrößerung und
- Fig. 5: das Beispiel für ein Ablaufdiagramm gemäß dem erfindungsgemäßen Verfahren.

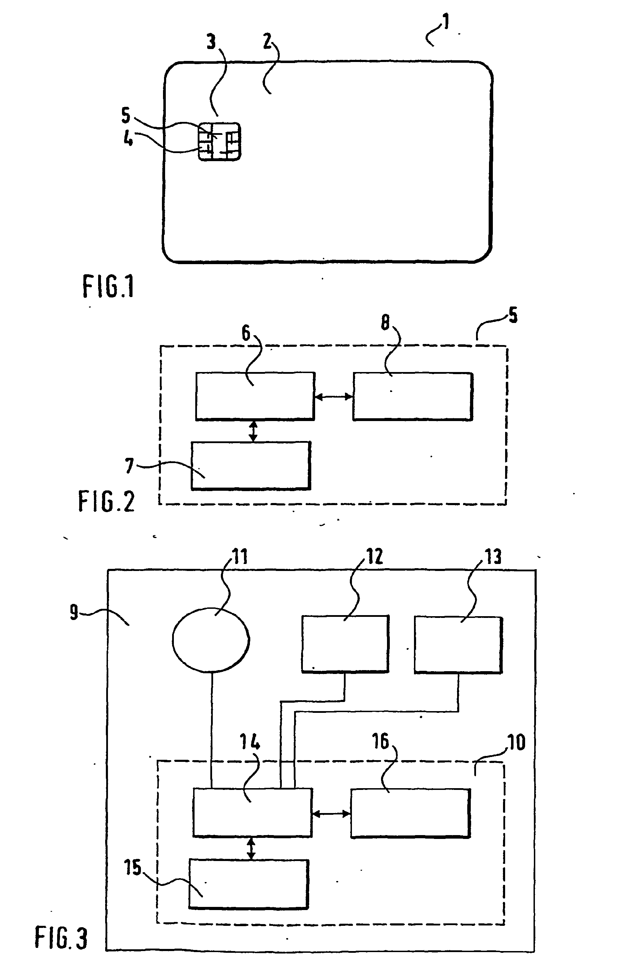

Fig. 1 zeigt eine Chipkarte 1 als ein Beispiel für einen tragbaren Datenträger in Aufsicht. Die Chipkarte 1 besteht aus einem Kartenkörper 2 und einem Chipmodul 3, das in einer Aussparung des Kartenkörpers 2 angeordnet ist. Das Chipmodul 3 besteht aus einem Kontaktfeld 4 und einem integrierten Schaltkreis 5, der unterhalb des Kontaktfeldes 4 angeordnet ist. Die Abmessungen der Chipkarte 1 sind z.B. durch die ISO-Norm 7810 festgelegt und die Funktionsweise des integrierten Schaltkreises 5 ist beispielsweise kompatibel zur ISO-Norm 7816. Die Chipkarte 1 kann als Ausweis für eine Zugangskontrolle zu einem Gebäude vorgesehen sein oder als eine Berechtigungskarte für den Zugang zu einem elektrischen Gerät, beispielsweise einem Computer. Weiterhin kann es sich bei der Chipkarte 1 um eine Bankkarte, eine Kreditkarte, eine Scheckkarte oder ähnliches handeln, mit deren Hilfe Finanztransaktionen durchgeführt werden können.

Neben der in Fig. 1 dargestellten Chipkarte 1 kann die Erfindung auch in Zusammenhang mit anderen Chipkarten oder beliebigen anderen Datenträgern eingesetzt werden, die in der Lage sind, Daten zu speichern.

Die Fig. 2 zeigt ein vereinfachtes Blockschaltbild des integrierten Schaltkreises 5 der in Fig. 1 dargestellten Chipkarte 1. Bei dem integrierten Schaltkreis 5 handelt es sich um einen Mikroprozessor, der in der Lage ist, selbständig Berechnungen durchzuführen. Der integrierte Schaltkreis 5 besteht aus einer Zentraleinheit 6, einem Speicher 7 und einer Ein-/Ausgabeinheit 8. Die Zentraleinheit 6 ist zum Zwecke des Datenaustausches sowohl mit dem Speicher 7 als auch mit der Ein-/Ausgabeeinheit 8 verbunden. Die Zentraleinheit 6 steuert die Funktionsweise des integrierten Schaltkreises 5 und greift dabei in der Regel auf Befehle zurück, die im Speicher 7 abgelegt sind. Der Speicher 7 kann als nichtflüchtiger Speicher, in der Regel ROM oder EEPROM oder als flüchtiger Speicher (RAM) ausgeführt sein. Meist sind sowohl ein flüchtiger als auch ein nichtflüchtiger Speicher gleichzeitig vorhanden. Die von der Zentraleinheit 6 ausgeführten Befehle sind üblicherweise im ROM abgelegt, zum Teil auch im EEPROM. Im EEPROM sind darüber hinaus auch die Referenzwerte für die PIN bzw. für das biometrische Merkmal und weitere für die Anwendung benötigte Daten abgelegt Der RAM dient als Arbeitsspeicher, in dem gerade benötigte Daten temporär zwischengespeichert werden.

Der Datenaustausch zwischen dem integrierten Schaltkreis 5 und der Außenwelt erfolgt über die Ein-/ Ausgabeeinheit 8, die beispielsweise als serielle Schnittstelle ausgeführt und mit dem für die Ein-/Ausgabe von Daten vorgesehenen Kontakt des Kontaktfeldes 4 elektrisch leitend verbunden ist. Für das erfindungsgemäße Verfahren ist es nicht zwingend erforderlich, dass der Datenaustausch zwischen dem integrierten Schaltkreis 5 und der Außenwelt über das Kontaktfeld 4 abgewickelt wird. Statt dessen kann auch eine kontaktlose Chipkarte zum Einsatz kommen, bei der der Datenaustausch nicht über das Kontaktfeld 4 erfolgt, sondern beispielsweise über eine Antennenspule oder über elektrische Koppelffächen.

Obwohl dies in Fig.1 nicht explizit dargestellt ist, kann die Chipkarte 1 über einen Fingerabdrucksensor zur messtechnischen Erfassung des Fingerabdrucks verfügen. Dieser Sensor wäre dann an einer geeigneten Stelle des Kartenkörpers 2 angebracht. In der Regel wird der Fingerabdrucksensor jedoch am Endgerät angebracht sein, wie dies in Fig. 3 dargestellt ist, da zur Integration in Chipkarten 1 geeignete Fingerabdrucksensoren derzeit nur sehr bedingt verfügbar sind.

Fig. 3 zeigt ein Blockschaltbild eines Endgeräts 9, mit dem die Chipkarte 1 in Datenaustausch tritt. Das Endgerät 9 weist einen integrierten Schaltkreis 10 sowie einen Fingerabdrucksensor 11, eine Tastatur 12 und eine Anzeige 13 auf. Der Fingerabdrucksensor 11 kann bei der Variante der Erfindung, bei der die Chipkarte über einen eigenen Fingerabdrucksensor verfügt, entfallen. Der integrierte Schaltkreis 10 des Endgeräts 9 weist in Analogie zum integrierten Schaltkreis 5 der Chipkarte 1 eine Zentraleinheit 14 auf, die mit einem Speicher 15 und einer Ein-/Ausgabeeinheit 16 verbunden ist. Weiterhin ist die Zentraleinheit 14 auch mit dem Fingerabdrucksensor 11, mit der Tastatur 12 und der Anzeige 13 verbunden.

Mit Hilfe des Fingerabdrucksensors 11 kann ein Fingerabdruck des Benutzers messtechnisch erfasst werden. Die so ermittelten Daten können dann in der Zentraleinheit 14 weiterverarbeitet werden und das Ergebnis dieser Verarbeitung kann über die Ein-/ Ausgabeeinheit 16 an die entsprechende Ein-/ Ausgabeeinheit 8 des integrierten Schaltkreises 5 der Chipkarte 1 übermittelt werden. Ebenso kann die Zentraleinheit 14 über die beiden Ein-/Ausgabeeinheiten 8 und 16 Daten vom integrierten Schaltkreis 5 der Chipkarte 1 empfangen. Über die Tastatur 12 kann der Benutzer für die jeweilige Anwendung benötigte Daten manuell eingeben. Welche Dateneingabe jeweils erforderlich ist, kann dabei auf der Anzeige 13 angezeigt werden.

Um eine missbräuchliche Verwendung der Chipkarte 1 durch einen unberechtigten Dritten zu verhindern, beispielsweise bei Verlust- oder Diebstahl der Chipkarte 1 ist die Benutzung der Chipkarte 1 nur nach einer zuvor erfolgten positiven Identifizierung bzw. Verifizierung des Fingerabdrucks möglich. Die Identifizierung über dieses biometrisches Merkmal ersetzt oder ergänzt die bei Chipkarten 1 übliche Authentifizierung des Benutzers durch Eingabe einer geheimen persönlichen Identifikationsnummer (PIN). Ein Referenzwert für diese Identifikationsnummer ist im Speicher 7 des integrierten Schaltkreises 5 von außen unzugänglich gespeichert und wird mit der eingegebenen Identifikationsnummer verglichen. Analog hierzu sind bei der Erfindung im Speicher 7 des integrierten Schaltkreises 5 Referenzwerte für den Fingerabdruck gespeichert, auf die bei einer Prüfung der Messwerte zurückgegriffen wird. Fällt der PIN-Vergleich bzw. die Prüfung des Fingerabdrucks positiv aus, so wird die Chipkarte 1 für die Benutzung freigegeben Andernfalls werden in der Regel noch eine bestimmte Anzahl von weiteren Versuchen zugelassen und falls auch diese Versuche nicht positiv verlaufen, wird die Chipkarte gesperrt.

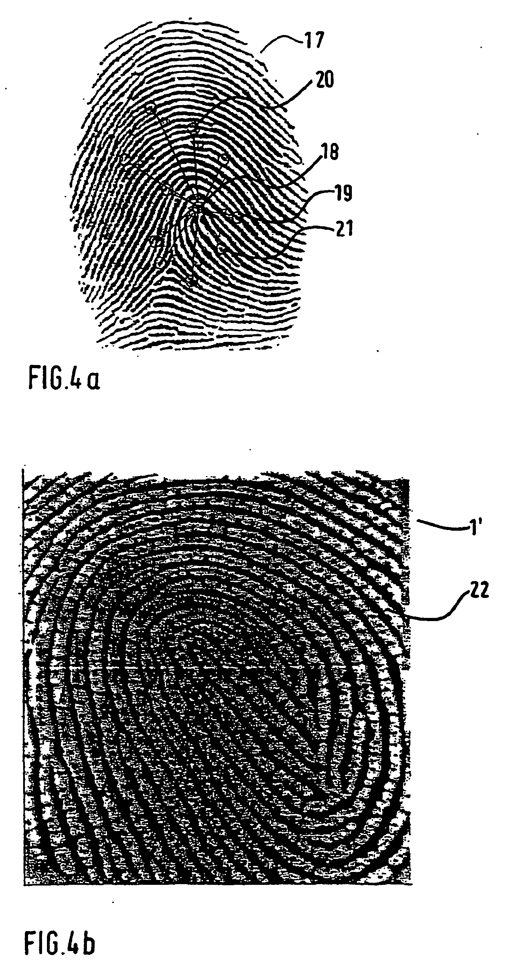

Die Fig. 4a zeigt einen Fingerabdruck 17 mit einem Zentrum 18 und Minutien 19. Bei der Auswertung von den Fingerabdrücken wird zunächst der Fingerabdruck meßtechnisch erfaßt, um anschließend aus den erhaltenen Meßwerten charakteristische Einzelheiten des Fingerabdrucks zu extrahieren. Charakteristische Merkmale eines Fingerabdrucks sind beispielsweise die Minutien. Minutien sind charakteristische Punkte oder Formen der Fingerabdrucklinien, beispielsweise Linienverzweigungen 20 oder Linienendpunkte 21.

Weitere charakteristische Merkmale eines Fingerabdruckes sind die Poren, welche anhand der Fig. 4b, die einen vergrößerten Ausschnitt eines Fingerabdruckes zeigt, dargestellt. Die Poren des Fingerabdrucks 1'sind dabei mit 22 bezeichnet

Zur Auswertung können beispielsweise die Koordinaten sowie die Art der Minutien ermittelt und mit entsprechenden Referenzdaten verglichen werden. Die entsprechenden Referenzdaten werden in Tabellenform im tragbaren Datenträger abgelegt, wie dies in den Tabellen 1 und 2 gezeigt ist.

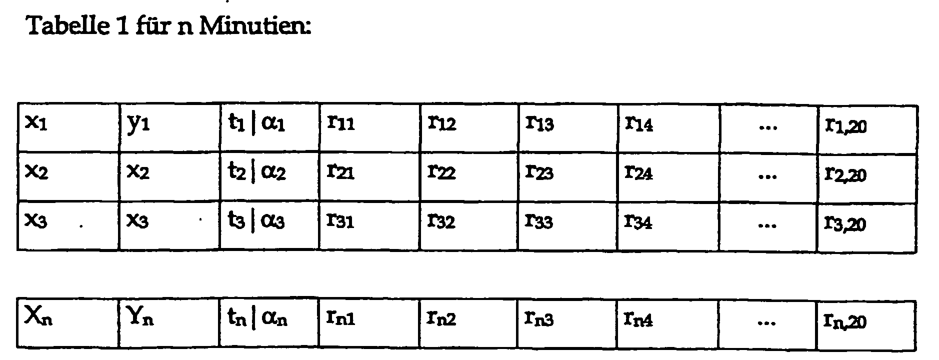

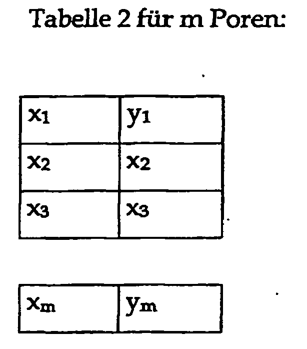

In den Tabellen 1 und 2 werden mit xᵢ und yᵢ die Positionen der i-ten Minutie bzw. Pore bezeichnet. In Tabelle 1 wird überdies mit t|α der Typ und die Richtung der Minutie angegeben, wobei diese Daten komprimiert, vorzugsweise in einem Byte im Speicher der Chipkarte abgelegt sind. Die ridge counts der i-ten Minutie in Bezug auf den y-ten Nachbarn ist mit rᵢⱼ angegeben. Die Tabelle enthält eine gesamte Anzahl n von Minutien (Tabelle 1), die Gesamtanzahl der betrachteten Poren beträgt m. Überdies werden in den Tabellen noch die Koordinaten des Auszeichnungspunktes (x_{com}, y_{com}) sowie die Richtung des Auszeichnungsvektors (α_{com}) abgelegt

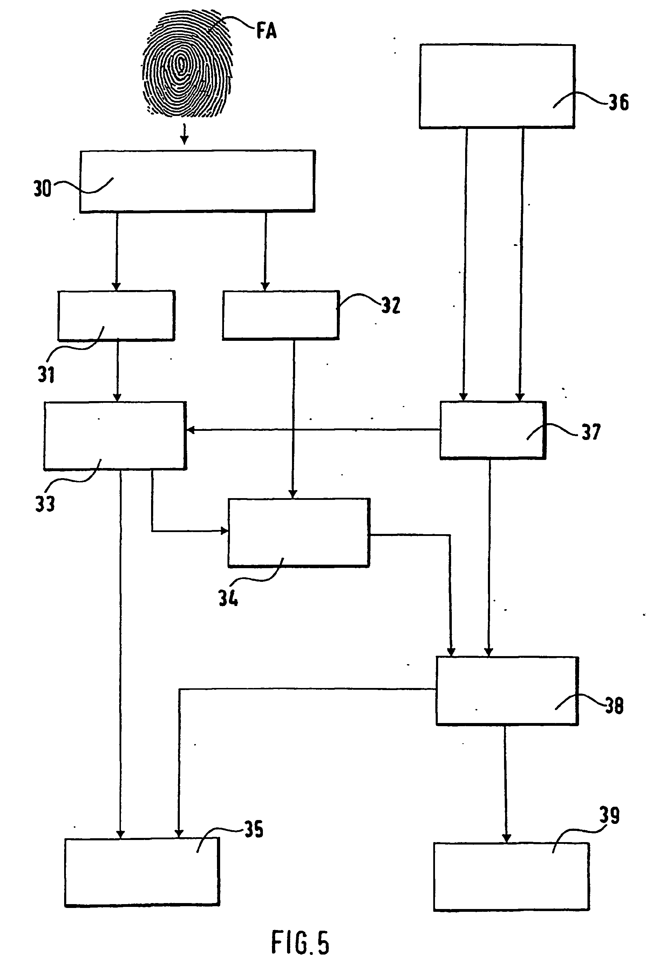

In Fig. 5 ist schließlich ein Flußdiagramm dargestellt, welches den prinzipiellen Verfahrensablauf für die Verifikation eines Fingerabdrucks angibt.

Zunächst wird der Fingerabdruck 1 in einem ersten Schritt 30 mittels eines Sensors aufgenommen und die charakteristischen Merkmale werden extrahiert. Hierbei erfolgt eine Aufteilung in Minutien (Schritt 31) und Poren (Schritt 32). Die Überprüfung der Minutien wird in Schritt 33 im Terminal durchgeführt. Zur Überprüfung werden aus der Chipkarte die in Schritt 36 getrennt nach Minutien- und Poren-Information zur Verfügung gestellten Referenzdaten, welche die Minutien betreffen, in Schritt 37 über eine Schnittstelle an das Terminal gegeben.

In Abhängigkeit vom Überprüfungsergebnis in Schritt 33 wird die Verifikation entweder abgebrochen (Schritt 35), wenn die erfaßten bzw. aus dem Fingerabdruck extrahierten Minutien nicht mit den in der Chipkarte abgespeicherten Referenzdaten übereinstimmen.

Bei der Überprüfung der Minutien wird zunächst ein übereinstimmendes Minutienpaar gesucht und aus der Position ein Offset und ggf. einen Drehwinkel des Fingerabdruckes bestimmt. Offset und Drehwinkel werden der weiteren Überprüfung zugrundegelegt, wobei eine Korrektur des Offsets und des Drehwinkels nach der Überprüfung weiterer Minutien durchgeführt werden kann.

Im Falle der Übereinstimmung liefert Schritt 33 einen Offset und einen Drehwinkel, welche für den folgenden mit Schritt 34 zur Verfügung gestellt werden. In diesem Schritt werden unter Verwendung des Offsets und des Drehwinkels, welche bei der Minutienüberprüfung ermittelt wurden, relative Positionen in Bezug auf die Lage der Minutien erzeugt und der Chipkarte übergeben.

In der Chipkarte wird sodann in Schritt 38 ein Vergleich der aktuell aufgenommenen Poren mit den Referenzdaten der Poren durchgeführt. Auch hier wird in Abhängigkeit vom Vergleichsergebnis entweder der Vorgang der Verifikation abgebrochen (Schritt 35) oder die Überprüfung wird mit Schritt 39 erfolgreich abgeschlossen, d.h. der Zugang zu den Kartendaten und somit zu den gewünschten Diensten wird gewährt.

Mit dem erfindungsgemäßen Verfahren wird erreicht, daß die vergleichsweise aufwendige Minutienüberprüfung in einem Terminal stattfinden kann, während die weniger aufwendige Überprüfung der Poren in der Chipkarte erfolgt.

## Patentansprüche

1. Verfahren zum Prüfen eines Fingerabdruckes, dessen Referenzdaten in einem tragbaren Datenträger (1) abgelegt sind, wobei die Referenzdaten zumindest Positionen und Orientierungen von Minutien (19) und Poren (22) sowie einen Ausrichtungsvektor enthalten, **dadurch gekennzeichnet, daß** bei der Prüfung des Fingerabdrucks
- Meßwerte, welche den Ist-Wert des aufgenommenen Fingerabdrucks angeben, aufgenommen werden (Schritt 30),
- aus den Meßwerten die Minutien und die Poren extrahiert werden (Schritte 31 and 32),
- die Referenzdaten der Minutien sowie der Ausrichtungsvektor aus dem tragbaren Datenträger ausgelesen werden (Schritt 37), und
- die Minutien aus dem aufgenommenen Fingerabdruck außerhalb des tragbaren Datenträgers mit den entsprechenden Referenzdaten verglichen werden (Schritt 33),
**dadurch gekennzeichnet, daß**:
- die Position der Poren zu den Minutien an den tragbaren Datenträger übermittelt wird (Schritt 34), und
- die Poren im tragbaren Datenträger überprüft werden (Schritt 38).

2. Verfahren nach Anspruch 1, **dadurch gekennzeichnet, dass** eine Positions- und Rotationsabweichung des Ausrichtungsvektors errechnet und damit ein Ausrichtungspunkt bestimmt wird, welcher zur Generierung des Porendatensatzes dient, der im Datenträger ausgewertet wird.

3. Verfahren nach Anspruch 1 oder 2, **dadurch gekennzeichnet, daß** als Startpunkt des Ausrichtungsvektors der Schwerpunkt der Minutien oder das Zentrum des Fingerabdrucks verwendet wird.

4. Verfahren nach einem der Ansprüche 1 bis 3, **dadurch gekennzeichnet, daß** zusätzlich die Anzahl der Linienübergänge zwischen den Minutien bei der Erzeugung des Referenzdatensatzes und/ oder bei der Überprüfung des Fingerabdrucks verwendet wird.

5. Verfahren nach einem der Ansprüche 1 bis 4, **dadurch gekennzeichnet, daß** ein Vergleichsdatensatz erzeugt wird, welcher die relativen Koordinaten der Poren zum Startpunkt des Ausrichtungsvektors enthält.

6. Verfahren nach einem der Ansprüche 1 bis 5, **dadurch gekennzeichnet, daß** die relativen Koordinaten sortiert werden nach Abstand und/oder Winkel zum Startpunkt.

7. Verfahren nach einem der Ansprüche 1 bis 6, **dadurch gekennzeichnet, daß** die Anzahl der Linienübergänge zwischen dem Startpunkt und den Poren aufgezeichnet bzw. ausgewertet wird.

8. Verfahren nach einem der vorangegangenen Ansprüche, **dadurch gekennzeichnet, daß** der Ausrichtungsdatensatz in der Chipkarte auslesbar, der Vergleichsdatensatz nicht auslesbar gespeichert ist.

## Claims

1. A method for testing a fingerprint whose reference data are stored in a portable data carrier (1), the reference data containing at least positions and orientations of minutiae (19) and pores (22) and an orientation vector, **characterized in that** the testing of the fingerprint comprises
- sensing measuring values stating the actual value of the sensed fingerprint (step 30),
- extracting the minutiae and the pores from the measuring values (steps 31 and 32),
- reading the reference data of the minutiae and the orientation vector from the portable data carrier (step 37), and
- comparing the minutiae from the sensed fingerprint outside the portable data carrier with the corresponding reference data (step 33),
**characterized by**
- transmitting the position of the pores relative to the minutiae to the portable data carrier (step 34), and
- checking the pores in the portable data carrier (step 38).

2. A method according to claim 1, **characterized in that** a positional and rotational deviation of the orientation vector is calculated and used to determine an orientation point which is used to generate the pore data record which is evaluated in the data carrier.

3. A method according to claim 1 or 2, **characterized in that** the centroid of the minutiae or the center of the fingerprint is used as the starting point of the orientation vector.

4. A method according to any of claims 1 to 3, **characterized in that** the ridge count between minutiae is additionally used in the generation of the reference data record and/or in the check of the fingerprint.

5. A method according to any of claims 1 to 4, **characterized in that** a comparative data record is generated that contains the coordinates of the pores relative to the starting point of the orientation vector.

6. A method according to any of claims 1 to 5, **characterized in that** the relative coordinates are sorted according to distance and/or angle relative to the starting point.

7. A method according to any of claims 1 to 6, **characterized in that** the ridge count between the starting point and the pores is recorded or evaluated.

8. A method according to any of the above claims, **characterized in that** the orientation data record is stored in the chip card in readable fashion while the comparative data record is stored in unreadable fashion.

## Revendications

1. Procédé de contrôle d'une empreinte digitale, dont les données de référence sont enregistrées dans un support de données (1) portable, sachant que les données de référence contiennent au moins les positions et les orientations de minuties (19) et de pores (22), ainsi qu'un vecteur d'orientation, **caractérisé en ce que**, lors du contrôle de l'empreinte digitale :
- des valeurs de mesure qui donnent la valeur réelle de l'empreinte digitale enregistrée sont enregistrées (étape 30),
- les minuties et les pores sont extraits des valeurs de mesure (étapes 31 et 32),
- les données de référence des minuties, ainsi que le vecteur d'orientation, sont lus depuis le support de données portable (étape 37) et
- les minuties provenant de l'empreinte digitale enregistrée sont comparées aux données de référence correspondantes en dehors du support de données portable (étape 33),
**caractérisé en ce que**
- la position des pores par rapport aux minuties est transmise au support de données portable (étape 34) et
- les pores sont contrôlés dans le support de données portable (étape 38).

2. Procédé selon la revendication 1, **caractérisé en ce qu'**un écart de position et de rotation du vecteur d'orientation est calculé et qu'un point d'orientation est déterminé à partir de ceux-ci, lequel sert à la génération du jeu de données sur les pores qui est évalué dans le support de données.

3. Procédé selon la revendication 1 ou 2, **caractérisé en ce que**, comme point de départ du vecteur d'orientation, on utilise le barycentre des minuties ou le centre de l'empreinte digitale.

4. Procédé selon l'une quelconque des revendications 1 à 3, **caractérisé en ce qu'**en plus, lors de la génération du jeu de données de référence et/ou lors du contrôle de l'empreinte digitale, on utilise le nombre des transitions de lignes entre les minuties.

5. Procédé selon l'une quelconque des revendications 1 à 4, **caractérisé en ce qu'**un jeu de données de comparaison est engendré, lequel contient les coordonnées relatives des pores par rapport au point de départ du vecteur d'orientation.

6. Procédé selon l'une quelconque des revendications 1 à 5, **caractérisé en ce que** les coordonnées relatives sont triées d'après la distance et/ou l'angle par rapport au point de départ.

7. Procédé selon l'une quelconque des revendications 1 à 6, **caractérisé en ce que** le nombre des transitions de lignes entre le point de départ et les pores est enregistré, respectivement évalué.

8. Procédé selon l'une quelconque des revendications précédentes, **caractérisé en ce que** le jeu de données d'orientation est mémorisé dans la carte à puce de façon lisible, le jeu de données de référence de façon non lisible.
